# EUROPÄISCHE PATENTSCHRIFT

(11) **EP 4 414 251 B1**
(45) Veröffentlichungstag und Bekanntmachung des Hinweises auf die Patenterteilung: **23.07.2025**
(21) Anmeldenummer: 23207913.7
(22) Anmeldetag: 06.11.2023
(51) Int. Cl.: B62D 53/06, B62D 63/06, B60R 19/56

(54) **INNENLADER MIT VARIABLEM UNTERFAHRSCHUTZ**
INTERNAL LOADER WITH VARIABLE UNDERRUN PROTECTION
CHARGEUR INTERNE AVEC PROTECTION DE SOUS-TRACTION VARIABLE

(30) Priorität: 08.02.2023 DE 102023103079
(43) Veröffentlichungstag der Anmeldung: 14.08.2024
(73) Patentinhaber: Langendorf GmbH, 45731 Waltrop (DE)
(72) Erfinder: Strautmann, Klaus-Peter, Dr., 48291 Telgte (DE); Tebrügge, Johannes, 46354 Südlohn (DE); Wilbuer, Christopher, 59348 Lüdinghausen (DE)
(74) Vertreter: Dr. Träger & Strautmann PAe PartG mbB

(56) Entgegenhaltungen:
- EP-A1- 4 063 243
- WO-A2-97/20708
- DE-A1- 3 827 076
- US-A- 4 627 666

## Beschreibung

Die Erfindung betrifft einen vorzugsweise als Sattelauflieger ausgebildeten Innenlader nach dem Oberbegriff des Anspruchs 1.

Ein Innenlader ist eine spezielle Form eines Sattelaufliegers, der es ermöglicht, besonders hohe bzw. breite Frachtstücke aufrecht und zwischen den Rädern stehend zu transportieren. Zu diesem Zweck sind die Räder nicht durch durchgehende Achsen miteinander verbunden, sondern an Einzelradschwingen an einem längs verlaufenden Rahmenprofil federnd aufgehängt. Das linke und das rechte Rahmenprofil sind nur am vorderen Ende miteinander verbunden, so dass dazwischen Platz verbleibt, um Frachtstücke hochkant zwischen die Profile zu laden. Das Fahrgestell ist somit U-förmig und hat in Draufsicht daher etwa die Form einer Stimmgabel ohne Griff. Verwendet werden Innenlader beispielsweise zum Transport großer Glasscheiben oder Beton-Fertigteilen.

Der U-förmige Fahrzeugrahmen weist in der Regel zwischen seinen Schenkeln einen auch nach unten hin offen Ladeschacht auf. In diesem Fall können im unteren Bereich der U-Schenkel Ladeschienen zur Aufnahme eines Transportgestells angeordnet sein. Zu transportierende Ladung kann dann zunächst auf das genannte Transportgestell und dieses dann in den Ladeschacht des Innenlader geladen werden. Um das Be- und Entladen zu erleichtern kann der Fahrzeugrahmen über die Einzelradaufhängung der Räder absenkbar und anhebbar sein. Um ein zu transportierendes Bauteil gegen Verrutschen zu sichern sind in der Regel Spanngurte, Hydraulikstempel oder dergleichen vorgesehen.

Das nach hinten offene Heck des Fahrzeugrahmens ist üblicherweise mit einem Abschlusstor verschließbar. Das Abschlusstor kann beispielsweise um eine vertikale Drehachse drehbar an einem der U-Schenkel gelagert und am anderen U-Schenkel verriegelbar sein. Ein derartiger Innenlader ist aus der gattungsbildenden DE 20 2008 012 470 U1, DE 38 27 076 A1 sowie der DE 20 2016 106 682 U1 bekannt, die jeweils auf die Anmelderin zurückgehen. Ebenso kann das Abschlusstor nach Art einer Bahnschranke um eine horizontal in Fahrtrichtung des Innenladers ausgerichtete, oder in eine in der Orientierung veränderbare, Drehachse an einem der U-Schenkel gelagert und am anderen U-Schenkel verriegelbar sein. Ist das Abschlusstor sowohl um eine vertikale als auch um eine horizontale Achse schwenkbar, wird es nachfolgend als Kombitor bezeichnet.

Zusätzlich kann an dem heckseitigen Abschlusstor ein Unterfahrschutz angeordnet sein, um eine nach gesetzlichen Bestimmungen maximale Unterfahrhöhe zu gewährleisten. Damit soll vermieden werden, dass bei einem Auffahrunfall beispielsweise ein Personenkraftwagen unter Teile des Chassis des Innenladers gerät und dort eingeklemmt wird. Ein solcher Unterfahrschutz ist beispielsweise durch eine Stange oder ein Rohr mit unterschiedlichen Querschnittsformen gebildet, das fest am Fahrzeugrahmen oder gegebenenfalls auch verschwenkbar am Abschlusstor des Innenladers angeordnet ist.

Weiterhin ist es möglich, dass zum Beispiel ein Betonbauteil mit Überlänge transportiert werden soll. Hierzu kann beispielsweise das Kombitor nach hinten hin aufgeschwenkt oder nach oben hin hochgeklappt werden, um eine Ladefläche des Innenladers zugänglich zu machen. Nachfolgend wird eine überlange Ladung aufgelegt und steht nach hinten über die Ladefläche über. Durch das Hochschwenken des Tores ändert sich die Fahrzeuglänge nicht. Eine Transportfahrt mit hochgeschwenktem Tor erfolgt somit unter Einhaltung der zulässigen Gesamtlänge des eigentlichen Innenladers.

Ist der für den Innenlader vorgesehene Unterfahrschutz am Kombitor angeordnet, wird er beim Hochschwenken des Tores ebenfalls hochgeschwenkt. Beim Transport von Ladung mit Überlänge befindet sich der Unterfahrschutz dann in einer Position, in der er seiner bestimmungsmäßigen Aufgabe nicht nachkommt. In Abhängigkeit von konstruktiver Ausgestaltung und Kinematik von Abschlusstor und Unterfahrschutz kann es zudem vorkommen, dass bei hochgeschwenktem Tor Teile des Innenladers nach hinten optisch verdeckt werden. Beispielsweise kann eine Rückleuchte an einem U-Schenkel des Innenlader-Fahrzeugrahmens durch den Unterfahrschutz verdeckt sein.

Aufgabe der Erfindung ist es, die beschriebenen Nachteile zu beseitigen und einen Innenlader anzugeben, der den Vorschriften der Straßenverkehrsordnung entspricht und mit dem insbesondere überlange Gegenstände verkehrssicher und zulassungskonform transportierbar sind.

Diese Aufgabe wird gelöst durch einen Innenlader mit den Merkmalen des Anspruchs 1.

Der Innenlader ist in an sich bekannter Weise als Sattelauflieger ausgebildet und weist einen im Wesentlichen U-förmigen Fahrzeugrahmen auf, an dessen beiden U-Schenkeln jeweils Räder vorzugsweise in Einzelradaufhängung angeordnet sind. In Fahrtrichtung voraus des Innenladers ist an seiner Vorderseite ein Quersteg zum Verbinden der beiden U-Schenkel ausgebildet. Der Innenlader, beziehungsweise eine Ladefläche oder ein Ladeschacht des Innenladers, ist heckseitig offen. Zum Be- und Entladen kann der Fahrzeugrahmen vorzugsweise hydraulisch oder pneumatisch angehoben und abgesenkt werden. Zusätzlich ist der Innenlader mit einem heckseitigen Unterfahrschutz ausgestattet, der im Wesentlichen balkenförmig ausgebildet ist.

Um die Ladefläche, beziehungsweise den Laderaum, nach hinten hin abzuschließen ist am Heck des Innenladers ein an sich beliebig ausgestaltbares Abschlusstor angeordnet. Der bereits genannte Unterfahrschutz ist häufig am Abschlusstor angebracht damit er dann, wenn das Abschlusstor geöffnet wird, mit dem Abschlusstor verschwenkt wird. Das Abschlusstor kann um eine vertikale Achse nach Art einer Zimmertür, um eine horizontale Achse nach Art einer Bahnschranke oder um beide Achsen schwenkbar sein.

Erfindungsgemäß weist der Innenlader nicht nur eine einzige Position zur Anbringung des Unterfahrschutzes auf, sondern zwei unterschiedliche Positionen. Die beiden unterschiedlichen Positionen werden nachfolgend als Positionen P1 und P2 bezeichnet. Unter der Position P1 wird eine Position des Unterfahrschutzes am Abschlusstor verstanden, unter der Position P2 eine Position des Unterfahrschutzes am Fahrzeugrahmen. In beiden Positionen ist der Unterfahrschutz lösbar anbringbar.

Erfindungsgemäß ist deshalb vorgesehen, dass
- der Unterfahrschutz und das Abschlusstor über eine lösbare erste Aufnahme aneinander gekoppelt sind und
- der Fahrzeugrahmen eine zweite Aufnahme zur lösbaren Anbringung des Unterfahrschutzes umfasst.

Es ist somit möglich, und auch einfach durchführbar, den Unterfahrschutz aus der am Abschlusstor vorgesehenen ersten Position P1 in die am Fahrzeugrahmen vorgesehene zweite Position P2 umzumontieren und umgekehrt.

Unter "lösbar befestigbar" wird verstanden, dass der Unterfahrschutz nicht nur für Reparaturarbeiten, beispielsweise zum Austausch eines defekten Unterfahrschutzes, vom Innenlader abgebaut oder demontiert werden kann, sondern dass eine einfache Demontage auch bei Bedarf möglich ist. Ein solcher Bedarf kann beispielsweise vorliegen, wenn ein zu transportierender Gegenstand den Innenlader heckseitig überragt und der Transport mit hochgeschwenktem Kombitor erfolgt. In diesem Fall kann ein am Kombitor montierter und mit dem Kombitor hochgeschwenkter Unterfahrschutz stören. Außerdem kann der Unterfahrschutz in der hochgeschwenkten Position seine bestimmungsmäßige Aufgabe, nämlich die Absicherung des Heckbereiches, nicht erfüllen. Ein einfach umbaubarer Unterfahrschutz ist dagegen sehr variabel einsetzbar und ermöglicht die Einhaltung straßenverkehrsrechtlicher Vorschriften.

Im Rahmen der Erfindung kann der Unterfahrschutz eine an sich beliebige Ausgestaltung aufweisen, die aber im montierten Zustand jedenfalls den Vorschriften der Straßenverkehrsordnung entspricht. Ebenso kann eine mechanische Ausgestaltung einer lösbaren Befestigung des Unterfahrschutzes an sich beliebig gewählt werden. Bevorzugt sind die im Folgenden beschriebenen Ausgestaltungen.

Es versteht sich, dass für eine hohe Stabilität der Unterfahrschutz sowie lösbare Befestigungsmittel vorzugsweise aus einem metallischen Werkstoff mit ausreichender Witterungsbeständigkeit bestehen.

Der Vorteil der Erfindung besteht somit insbesondere darin, dass bei Transport eines überlangen Bauteils ein zunächst am Abschlusstor angebrachter Unterfahrschutz demontiert und an anderer Stelle, nämlich am Fahrzeugrahmen, wieder angebaut werden kann. Somit kann das zur Aufnahme des überlangen Bauteiles nach oben oder nach hinten ausgeschwenkte Abschlusstor in der ausgeschwenkten Position verbleiben. Beispielsweise können die Aufnahmen für den Unterfahrschutz am Fahrzeugrahmen so konzipiert sein, dass die Position des Unterfahrschutzes am Fahrzeugrahmen sich unterhalb einer nach hinten überstehenden Ladung befindet. Dabei kann das Be- und Entladen sowie der eigentliche Transport ohne eine Behinderung oder Einschränkung durch den eventuell die heckseitige Öffnung des Ladebereiches beispielsweise teilweise überdeckenden Unterfahrschutz durchgeführt werden. Ebenso kann ein Unterfahrschutz, der beispielsweise an einem hochklappbaren Kombitor angeordnet ist, gelöst werden, um unter anderem eine Beleuchtung des Innenladers nicht zu verdecken.

Weiterhin ist es möglich, dass der Innenlader für spezielle Anwendungsfälle einen an solche Anwendungsfälle angepassten Spezial-Unterfahrschutz mitführt. Dieser Spezial-Unterfahrschutz kann eine an den jeweiligen Einsatzzweck angepasste konstruktive Ausgestaltung aufweisen, ist aber so konzipiert, dass er an die für den Standard-Unterfahrschutz vorgesehenen Aufnahmen montierbar ist. Es ist somit auch möglich, dass der Standard-Unterfahrschutz insbesondere bei Transportfahrten mit geöffnetem Abschlusstor in seiner Position am Abschlusstor verbleibt, zusätzlich jedoch der Spezial-Unterfahrschutz an die am Fahrzeugrahmen vorgesehenen Aufnahmen montiert wird.

In einer bevorzugten Ausführung umfasst der Unterfahrschutz und/oder der Innenlader Mittel zur werkzeuglosen Demontage des Unterfahrschutzes. Bei diesen Mitteln kann es sich vorzugweise um Bolzen-Verbindungen handeln. Der Unterfahrschutz selbst und die Koppelstellen am Fahrzeugrahmen bzw. Abschlusstor des Innenladers können beispielsweise Bohrungen aufweisen, die im montierten Zustand koinzidieren und somit das Einstecken eines Bolzens ermöglichen. Zur Sicherung eines so montierten Bolzens - und damit zur Sicherung des Unterfahrschutzes am Innenlader - können geeignete Sicherungselemente, beispielsweise Splinte vorgesehen sein.

Vorzugsweise ist der Unterfahrschutz am Fahrzeugrahmen des Innenladers, insbesondere an den (in Fahrtrichtung gesehen) hinteren Enden der Schenkel des Fahrzeugrahmens lösbar anbringbar. Das bedeutet, dass der Unterfahrschutz, der im Bereich der heckseitigen Öffnung des Fahrzeugrahmens angeordnet ist, gelöst und entfernt werden kann, um beispielsweise die Öffnung an der Ladefläche vollständig freizugeben. Somit können Gegenstände mit Überlänge geladen und transportiert werden. Die lösbare Befestigbarkeit wird beispielsweise mit Verschraubungen oder Steckbolzen zwischen dem Unterfahrschutz und entsprechenden Aufnahmen am Innenlader, beziehungsweise umgekehrt, ermöglicht. Ebenso können splintgesicherte oder mit einer Mutter verschraubte Bolzen die lösbare Befestigung realisieren.

Alternativ oder zusätzlich zu einer Anbringung am Fahrzeugrahmen kann auch vorgesehen sein, dass der Unterfahrschutz an einer für die Aufnahme von Transportgestellen vorgesehenen Ladeschiene des Innenladers lösbar anbringbar ist. Hierzu kann ein an sich beliebig ausgestaltbares lösbares Befestigungsmittel vorgesehen sein, um den Unterfahrschutz demontieren zu können. Beispielsweise können an dem Unterfahrschutz zwei gelochte Stege seitlich abragen, die wiederum an entsprechenden Durchbrüchen der üblicherweise paarweise vorhandenen Ladeschienen verschraubt oder verbolzt werden.

In vorteilhafter Weise ist der Unterfahrschutz an einem, vorzugsweise an mehreren, am Fahrzeugrahmen oder an der Ladeschiene angebrachten Eingleitern lösbar befestigbar. Die Eingleiter dienen auch dazu, beispielsweise eine Palette oder dergleichen beim Aufschieben auf die Ladefläche mit den Ladeschienen seitlich zu führen und auszurichten. Die lösbare Befestigung an den Eingleitern kann im Prinzip in gleicher Weise wie vorstehend beschrieben realisiert werden. Die Eingleiter an zwei Ladeschienen stehen meist nach hinten über eine Ladefläche des Innenladers über, so dass durch die lösbare Befestigung des Unterfahrschutzes an diesen Eingleitern die eigentliche Ladefläche nicht beeinträchtigt wird und somit vollflächig genutzt werden kann.

Zusätzlich zu einer lösbaren Anbringung des Unterfahrschutzes am Fahrzeugrahmen (Position P2) ist auch die lösbare Anbringung des Unterfahrschutzes am Abschlusstor (Position P1) möglich. Hierzu kann der Unterfahrschutz am Abschlusstor beispielsweise ebenfalls über Verschraubungen und/oder mittels Bolzen oder dergleichen lösbar befestigbar ausgebildet sein. Wird mit dem Innenlader ein Bauteil mit Überlänge transportiert, kann ein heckseitiges Abschlusstor, das um eine vertikale Drehachse relativ zum U-förmigen Fahrzeugrahmen verschwenkbar an einem U-Schenkel angeschlagen und am anderen U-Schenkel arretierbar ausgebildet sein kann, nicht geschlossen werden. Zudem überschreitet ein Innenlader mit einem nach hinten aufgeschwenkten Abschlusstor in vielen Fällen die zulässige Fahrzeuggesamtlänge. In solchen Fällen darf eine Transportfahrt nur dann durchgeführt werden, wenn der Innenlader ein Abschlusstor aufweist, das nach oben hin auschwenkbar ist. Die Transportfahrt mit einem überlangen Bauteil erfolgt dann, indem das Abschlusstor bei der Transportfahrt in seiner nach oben verschwenkten Position verbleibt und zudem der Unterfahrschutz vom Abschlusstor abgebaut und an den Innenlader-Fahrzeugrahmen angebaut worden ist.

Zur lösbaren Befestigung des Unterfahrschutzes am Fahrzeugrahmen und/oder am Abschlusstor ist in einer bevorzugten Ausführungsform ein Adapter vorgesehen. Der Adapter ist konstruktiv so ausgebildet, dass er einfach, vorzugsweise werkzeuglos, am Fahrzeugrahmen und/oder am Abschlusstor befestigbar ist. Beispielsweise kann er angeschraubt und/oder verbolzt sein.

Der Adapter kann eine an den Unterfahrschutz angepasste Aufnahme aufweisen. Ist als Unterfahrschutz beispielsweise ein Rund- oder Rechteckrohr vorgesehen, ist die Aufnahme des Adapters vorzugsweise an diese Kontur angepasst. In dieser Aufnahme wird der Unterfahrschutz dann beispielsweise verschraubt, verklemmt oder verbolzt. Es kann somit zum einen ein Adapter vorgesehen sein, mittels dessen der Unterfahrschutz am Tor befestigbar ist und ergänzend oder alternativ ein weiterer Adapter, mittels dessen der Unterfahrschutz am Fahrzeugrahmen befestigbar ist.

Es versteht sich, dass bei einer Montage am Fahrzeugrahmen mindestens ein Adapter vorgesehen ist um den Unterfahrschutz zu befestigen. Der Adapter kann somit nach Art einer Spannstange einstückig ausgeführt sein, wobei an einem solchen einstückigen Adapter wiederum zwei Aufnahmen zur Anbringung des einstückigen Adapters vorgesehen sein können.

Alternativ dazu ist es auch möglich, den Adapter mehrteilig auszuführen, beziehungsweise mehrere Adapter vorzusehen, die jeweils einzeln an entsprechende Aufnahmen an Fahrzeugrahmen und Abschlusstor koppelbar sind.

Die Verwendung eines oder mehrerer Adapter ermöglicht die Montage des Unterfahrschutzes an unterschiedlichen Positionen bzw. unterschiedlichen Koppelstellen. Insbesondere ist der Unterfahrschutz zum einen an das Abschlusstor und zum anderen an den Fahrzeugrahmen anbaubar. Bei Transportfahrten mit nicht-überstehender Ladung kann als Position für den Unterfahrschutz eine Position am Abschlusstor vorgesehen sein. Für Transportfahrten mit überstehender Ladung und hochgeschwenkten Tor kann der Unterfahrschutz vom Tor demontiert und mittels des Adapters an den Fahrzeugrahmen unterhalb der überstehenden Ladung angebaut werden.

Weiterhin ist es möglich, den Adapter so zu konzipieren, dass derselbe Adapter sowohl an das Tor als auch an den Fahrzeugrahmen koppelbar ist. In diesem Fall kommen also nicht zwei unterschiedliche Arten von Adaptern zum Einsatz, sondern lediglich eine Art, die universell einsetzbar ist.

Der Adapter kann als stegförmiger Verbinder zwischen dem Abschlusstor und dem Unterfahrschutz ausgebildet sein. Das bedeutet, dass der Adapter eine längliche Erstreckung aufweist und an seinem einen Ende, beispielsweise am Abschlusstor, verschraubbar ausgebildet ist und an seinem anderen Ende zum Beispiel eine Aufnahme mit Verschraubung für den rohrförmigen Unterfahrschutz aufweist. Vorzugsweise sind über die Längserstreckung des Unterfahrschutzes gesehen mehrere Adapter im Wesentlichen symmetrisch verteilt angeordnet.

Nach einer alternativen Ausgestaltung ist der Adapter auf die Ladeschiene und/oder auf deren Eingleiter aufschiebbar. Hierzu kann der Adapter durch eine Grundplatte gebildet sein sowie eine Aufnahmeplatte aufweisen, die von der Grundplatte durch Abstandshalter beabstandet ist. Grundplatte und/oder Aufnahmeplatte können Führungselement, beispielsweise Schlitze oder Anschläge, aufweisen, um den Adapter einfach ausrichten zu können. So kann die Grundplatte beispielsweise unterhalb des Eingleiters der Ladeschiene am U-Schenkel des Fahrzeugrahmens positioniert werden. Ein in der Aufnahmeplatte vorgesehener Schlitz nimmt dann den schienenförmigen Eingleiter auf und durch die mit Abstandshaltern beabstandete Grundplatte ist dann der Adapter an dem Eingleiter fixiert. Vereinfacht gesagt ist ein solcher Adapter wie ein Schuh auf den Eingleiter aufschiebbar.

An der Unterseite der Grundplatte kann eine Aufnahme für den Unterfahrschutz angeordnet sein, um beispielsweise ein Vierkantrohr zu haltern. Die Kontur der Aufnahme ist dann vorzugsweise an die Kontur des Unterfahrschutzes angepasst. Der Unterfahrschutz kann an oder in der Aufnahme zum Beispiel verschraubt sein und der Adapter kann mit einem Bolzen relativ zur Ladeschiene beziehungsweise dem Eingleiter an diesen lösbar befestigbar ausgebildet sein.

Im Rahmen der Erfindung ist der Unterfahrschutz in an sich beliebiger Weise ausgestaltbar. Zur Gewichtsreduzierung ist vorgeschlagen, dass der Unterfahrschutz als Rundrohr oder Vierkantrohr ausgebildet ist. Als Werkstoff ist Metall bevorzugt, um eine ausreichende Stabilität zu gewährleisten.

Zur Verbesserung der Wirksamkeit des Unterfahrschutzes und zur Vermeidung von größeren Schäden beispielsweise an einem anderen Kraftfahrzeug kann dem Unterfahrschutz eine flächige Schürze zugeordnet sein. Diese Schürze ist beispielsweise durch ein Metall-Paneel gebildet, um eine Aufprallfläche zu vergrößern. Dementsprechend werden die auftretenden Kräfte bei einem Aufprall vermindert und die Folgen eines Unfalls minimiert. Das Paneel kann beispielsweise mit einem rohrförmigen Unterfahrschutz, der seinerseits über Adapter am Innenlader lösbar befestigbar ist, kombiniert werden.

Der Unterfahrschutz kann relativ zum Adapter beweglich, vorzugsweise verschiebbar sein. Zum Beispiel kann vorgesehen sein, dass der Adapter eine schellenförmige Befestigung umfasst, die an die Kontur des Unterfahrschutzes angepasst ist und diese umgreift. Die schellenförmige Befestigung ermöglicht eine Klemmverbindung von Adapter und Unterfahrschutz. Bei gelöster Klemmverbindung kann der Unterfahrschutz somit gegenüber dem Adapter verschoben und in eine zur Kopplung an das Abschlusstor und/oder an den Fahrzeugrahmen geeignete Position gebracht werden. Ist der Adapter auf dem Unterfahrschutz in die geeignete Position geschoben worden, kann die Klemmverbindung wieder fixiert werden.

Ebenso kann der Unterfahrschutz relativ zum Fahrzeugrahmen in Längsrichtung bewegbar und in unterschiedlichen Ausfahrstellungen fixierbar sein. Wird unter anderem ein Bauteil mit Überlänge mit dem Innenlader transportiert, so steht dieses nach hinten über eine Ladefläche beziehungsweise die U-Schenkel des Fahrzeugrahmens über. Um die Funktion des Unterfahrschutzes dennoch zu gewährleisten, kann dieser beispielsweise über teleskopierbare Stangen am Fahrzeugrahmen lösbar befestigbar sein. Somit kann eine Anpassung an den Überstand des zu transportierenden Bauteils erreicht werden.

Der Unterfahrschutz weist in am Fahrzeugrahmen montierter Position einen Abstand zum Boden auf, der maximal 100 mm bis 600 mm beträgt, vorzugsweise 300 mm bis 450 mm beträgt. Hierdurch wird die Gefahr reduziert, dass sich bei einem Auffahrunfall ein auf die Heckseite des Innenladers auffahrendes Fahrzeug unter den Innenlader schiebt.

Zudem ist es vorteilhaft, wenn der Unterfahrschutz geringfügig schmaler ist als der Innenlader, so dass er sich im montierten Zustand zwischen den Außenseiten des Fahrzeuges befindet, diese aber nicht überragt. Dabei ist der Unterfahrschutz vorzugsweise symmetrisch zur Fahrzeug-Mittenachse angebracht und weist beidseitig einen Abstand von 50 mm bis 200 mm, vorzugsweise 100 mm, zu den Fahrzeugaußenseiten auf.

Weitere die Erfindung verbessernde Maßnahmen werden nachstehend mit der Beschreibung von bevorzugten Ausführungsbeispielen der Erfindung anhand der Figuren näher dargestellt.

Die Figuren zeigen:
- Fig. 1: zeigt einen Innenlader in perspektivischer Ansicht,
- Fig. 2: zeigt eine Heckansicht des Innenladers aus Fig. 1 in Vergrößerung,
- Fig. 3: zeigt das Heck des Innenladers gemäß Fig. 2 mit teilweise hoch geklapptem Kombitor,
- Fig. 4: zeigt das Heck des Innenladers gemäß Fig. 2 mit vollständig hoch geklapptem Kombitor,
- Fig. 5: zeigt einen Ausschnitt "A" aus Fig. 4 in Vergrößerung,
- Fig. 6: zeigt das Heck eines Innenladers mit gelöstem Unterfahrschutz,
- Fig. 7: zeigt das Heck eines Innenladers mit vollständig hochgeklapptem Kombitor und einem Unterfahrschutz am Fahrzeugrahmen,
- Fig. 8: zeigt einen Ausschnitt aus Fig. 7 aus einer Blickrichtung "BR" in Vergrößerung,
- Fig. 9: zeigt einen Adapter in perspektivischer Ansicht vor dem Aufschieben auf eine am Innenlader vorgesehene Aufnahme und
- Fig. 10: zeigt den Adapter gemäß Fig. 9 nach dem Aufschieben auf die am Innenlader vorgesehene Aufnahme.

Gleiche oder ähnliche Elemente können in den nachfolgenden rein schematischen Figuren mit gleichen oder ähnlichen Bezugszeichen versehen sein. Ferner enthalten die Figuren der Zeichnung, deren Beschreibung sowie die Ansprüche zahlreiche Merkmale in Kombination. Einem Fachmann ist dabei klar, dass diese Merkmale auch einzeln betrachtet werden oder sie zu weiteren hier nicht näher beschriebenen Kombinationen zusammengeführt werden können. Die Erfindung erstreckt sich ausdrücklich auch auf solche Ausführungsformen, welche nicht durch Merkmalskombinationen aus expliziten Rückbezügen der Ansprüche gegeben sind, womit die offenbarten Merkmale der Erfindung, soweit dies technisch sinnvoll ist, beliebig miteinander kombiniert sein können. Die in den Figuren dargestellten Ausführungsbeispiele haben somit nur beschreibenden Charakter und sind nicht dazu gedacht, die Erfindung in irgendeiner Form einzuschränken.

Die im Weiteren verwendeten Begriffe: "obere", "oben", "untere", "linke" oder "rechte" beziehen sich auf die in der Zeichnung dargestellte Anordnung der Komponenten, die der Verwendung des Innenladers im Betriebsmodus entsprechen.

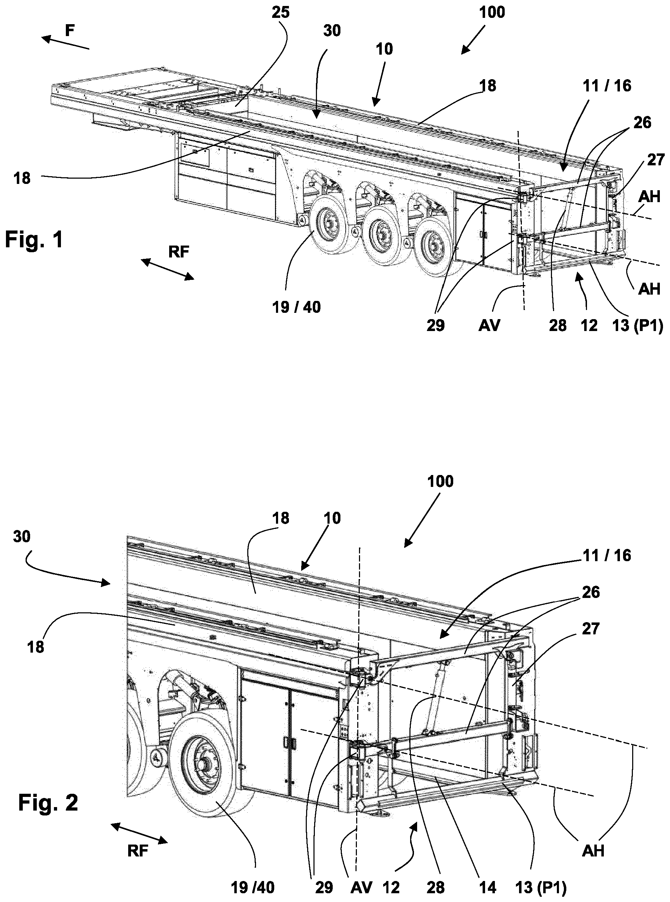

In Fig. 1 ist ein als Sattelauflieger ausgeführter Innenlader 100 abgebildet. Bei Transportfahrten wird der Innenlader 100 in Fahrtrichtung voraus F von einer Sattelzugmaschine (nicht dargestellt) gezogen. Mit einem Innenlader 100 können beispielsweise großformatige Betonteile, Glasscheiben und an sich beliebige Gegenstände transportiert werden. Der Innenlader 100 umfasst einen im Wesentlichen U-förmigen Fahrzeugrahmen 10, der durch zwei in einer Fahrzeuglängsrichtung RF ausgerichtet U-Schenkel 18 und einen Quersteg 25 gebildet ist. Der U-förmige Fahrzeugrahmen 10 umgibt einen nach unten und hinten offenen Ladeschacht 30 mit darin angeordneten Ladeschienen 14. An den U-Schenkeln 18 sind Räder 19 angeordnet, die vorzugsweise mit einer Hydraulik gekoppelt sind, um den Fahrzeugrahmen 10 zum Be- und Entladen anzuheben und abzusenken.

Der Fahrzeugrahmen 10 weist ein offenes Heck 12 auf, welches mit einem heckseitigen Abschlusstor 11 verschließbar ist. Das Abschlusstor 11 kann in an sich beliebiger Weise ausgebildet sein.

An dem Abschlusstor 11 ist ein heckseitiger Unterfahrschutz 13, beispielsweise in Form eines Rund- oder Vierkantrohrs, angeordnet. Ist der Unterfahrschutz 13 am Abschlusstor 11 angebracht, wird diese Position als Position P1 bezeichnet.

Fig. 2 zeigt eine vergrößerte Ansicht des Hecks 12 des Innenladers 100 gemäß Fig. 1. Im vorliegenden Ausführungsbeispiel ist das Abschlusstor 11 als Kombitor 16 ausgeführt und um eine vertikale Achse AV und zwei horizontale Achse AH schwenkbar. Damit das Abschlusstor 11 nicht nur um eine vertikale Achse AV, sondern auch um die horizontalen Achsen AH schwenkbar ist, umfasst es zwei Torbalken 26, die mit einem Verbinder 27 und einem Zylinder 28 gelenkig aneinander gekoppelt sind. Wird der Zylinder 28 ausgefahren, so wird das Abschlusstor 11 um die horizontalen Achsen AH der Scharnierpunkte 29 aufwärts in eine Offenposition geschwenkt.

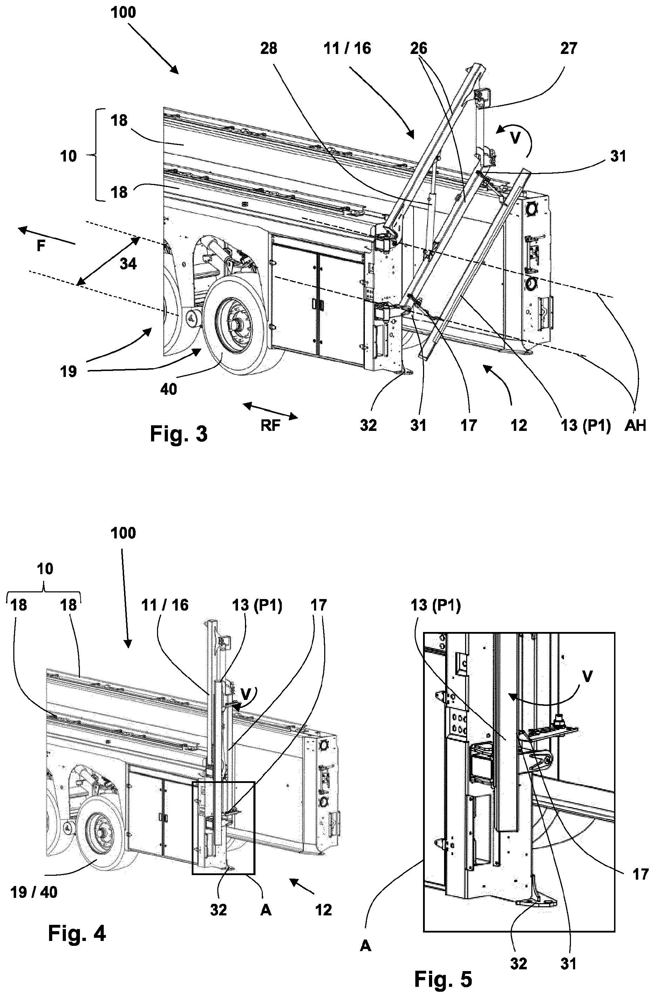

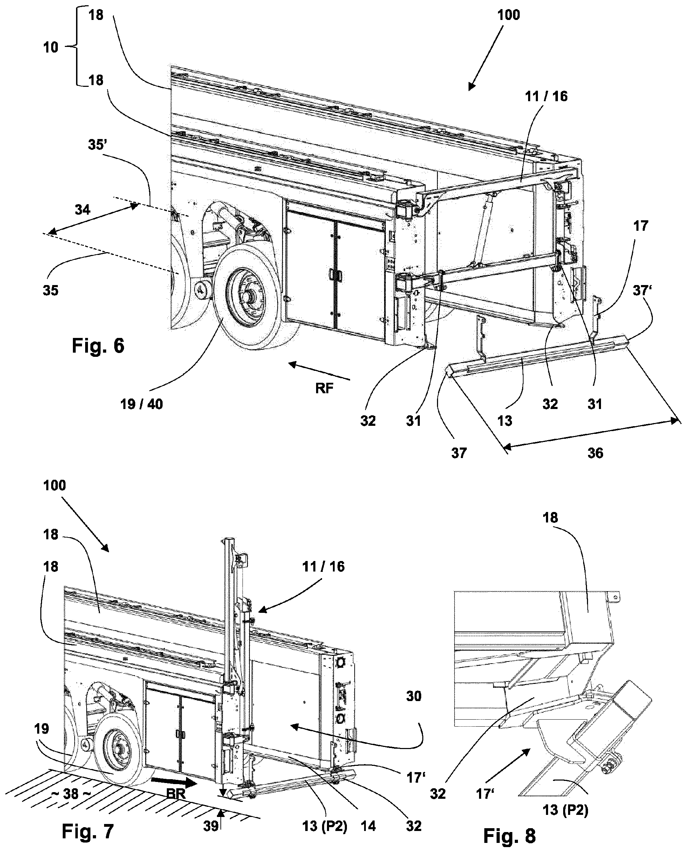

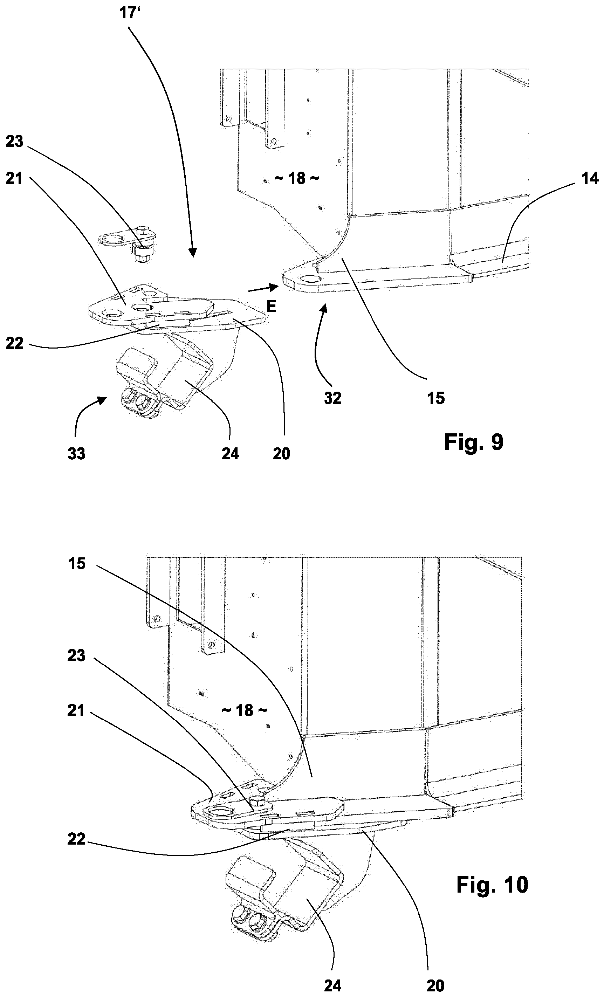

In Fig. 3 ist das Abschlusstor 11 als Kombitor 16 im teilweise aufgeklappten Zustand abgebildet. Um das Kombitor nach oben zu klappen, wird der Zylinder 28 ausgefahren. Hierdurch schwenkt das Kombitor 16 um die beiden horizontalen Drehachsen AH, die parallel zur Fahrtrichtung F ausgerichtet sind, relativ zu einem U-Schenkel 18 des Fahrzeugrahmens 10 des Innenladers 100. Um den Unterfahrschutz 13 in Position P1 lösbar am Kombitor 16 zu befestigen, sind am Kombitor 16 zwei längliche, stegförmige Adapter 17 angeordnet. Die stegförmigen Adapter 17 sind in ersten Aufnahmen 31 am unteren Torbalken 26 des Abschlusstores 11 befestigt. Beispielsweise kann eine lösbare Befestigung der einzelnen Komponenten miteinander durch Verschraubungen, mit Bolzen 23 oder dergleichen erfolgen. Durch die Lösbarkeit der Befestigung des variablen Unterfahrschutzes 13 kann dieser bei Nichtgebrauch entfernt und an anderer Stelle, insbesondere in einer am Fahrzeugrahmen 10 montierten Position P2 (vgl. Fig. 7), montiert werden. Im dargestellten Ausführungsbeispiel ist zur Montage des Unterfahrschutzes 13 an den Fahrzeugrahmen 10 ein Adapter 17' (vgl. Fig. 9) vorgesehen. Der Adapter 17' ist an zweiten Aufnahmen 32 montierbar. Die zweiten Aufnahmen 32 sind im dargestellten Ausführungsbeispiel an den Ladeschienen 14 der Schenkel 18 angeordnet.

In Fig. 4 ist das Kombitor 16 vollständig hochgeklappt. Zudem ist der Unterfahrschutz 13, der über ein am Adapter 17 angeordnetes Gelenk an den Torbalken 26 gekoppelt ist, in eine Richtung V aus einer Arbeitsstellung (vgl. Fig. 1 und 2) in eine Transportstellung (vgl. Fig. 4 und 5) geschwenkt worden. Somit kann vermieden werden, dass beispielsweise eine am Heck 12 des Innenladers 100 angebrachte Rückleuchte verdeckt wird.

In gleicher Weise kann ein Adapter 17, 17' auch derart ausgebildet sein, dass der Unterfahrschutz 13 in Fahrtrichtung F nach vorne oder hinten verlagerbar ist. Beispielsweise kann vorgesehen sein, dass der Unterfahrschutz 13 beim Transport eines überlangen Bauteils an teleskopierbaren Stangen relativ zum Fahrzeugrahmen 10 nach hinten verlagert wird, um seine Position so an einen Überstand des Bauteils anzupassen.

In Fig. 5 ist ein in Fig. 4 enthaltener Ausschnitt "A" vergrößert abgebildet. Auch hier ist der Unterfahrschutz 13 relativ zum Abschlusstor 11, beziehungsweise zum Kombitor 16, in Richtung V in die Transportstellung verschwenkt.

In Fig. 6 ist der Unterfahrschutz 13, der seinerseits an den länglichen, stegförmigen Adaptern 17 gehaltert ist, vom Kombitor 16 getrennt. Der Unterfahrschutz 13 kann dann separat, beispielsweise in einem entsprechend ausgebildeten Aufnahmefach des Innenladers 100, mitgeführt werden. Vorzugsweise wird er jedoch an einer anderen Stelle des Innenladers 100, insbesondere am in Fahrtrichtung F gesehen hinteren Ende der U-Schenkel 18, an den dafür vorgesehenen zweiten Aufnahmen 32 montiert.

Fig. 6 zeigt außerdem, dass der Unterfahrschutz 13 Außenseiten 37 und 37' umfasst und eine Breite 36 aufweist. Analog dazu weist der Innenlader 100 Außenseiten 35 und 35' auf, die eine Breite 34 des Innenladers definieren. Die Lage der Außenseiten 35 und 35' ergibt sich durch die Lage der Außenseiten 40 der Räder 19. Die Breite 36 des Unterfahrschutzes 19 ist geringer als die Breite 34 des Innenladers 100, so dass ein vorzugsweise symmetrisch zur Fahrzeugmittenachse montierter Unterfahrschutz 19 die Außenseiten 35, 35' des Innenladers nicht überragt.

In Fig. 7 ist das Kombitor 16 hochgeklappt und der Unterfahrschutz 13 ist mittels entsprechend ausgebildeter Adapter 17' unmittelbar am Fahrzeugrahmen 10 beziehungsweise an dessen U-Schenkeln 18 lösbar befestigt. Das Kombitor 16 befindet sich in einer hochgeschwenkten Position. Im Ladeschacht 30 könnte somit auf den Ladeschienen 14 ein Transportgestell mit einer überlangen Ladung (nicht dargestellt) aufgenommen werden, ohne dass der unterhalb der Ladeschienen 14 montierte Unterfahrschutz 13 stören würde.

Der Innenlader 100 steht mit seinen Rädern 19 auf einem Boden 38. Der Unterfahrschutz 19 weist in Position P2 einen Abstand 39 zum Boden auf, der im dargestellten Ausführungsbeispiel 450 mm beträgt. Dieser Abstand entspricht einerseits den gesetzlichen Anforderungen und gewährleistet andererseits eine ausreichende Bodenfreiheit auch bei unebenem Boden 38.

In Fig. 8 ist der unterhalb der Ladeschienen 14 montierte Unterfahrschutz 13 vergrößert aus einer Ansicht dargestellt, die einer Ansicht in Blickrichtung "BR" aus Fig. 7 entspricht. Der Unterfahrschutz 13, der beispielsweise als Metallrohr ausgeführt ist, ist mittels des Adapters 17' am U-Schenkel 18 des Innenladers 100, bzw. an dessen Ladeschiene 14, lösbar befestigt. Der Adapter 17' ist an die Kontur des Unterfahrschutzes 13 angepasst. Der Unterfahrschutz kann durch ein Rundrohr gebildet werden, welches innerhalb des Adapters 17' drehbar und somit frei justierbar ist. Ist der Unterfahrschutz 13 durch ein Quadratrohr gebildet, lässt es sich in einem Adapter 17' mit einer an das Quadratrohr angepassten Innenkontur zumindest in vier Positionen drehen beziehungsweise montieren.

Die Fig. 9 und 10 verdeutlichen den Aufbau und die Montage des Adapters 17'. Der Adapter 17' umfasst eine erste Platte 20, eine zweite Platte 21 sowie dazwischen angeordneten Abstandshalter 22. Im dargestellten Ausführungsbeispiel weisen beide Platten 20 und 21 Schlitze auf.

Die Platten 20 und 21 sowie die Abstandshalter 22 können fest miteinander verbunden, beispielsweise miteinander verschweißt, sein. Der Adapter 17' umfasst weiterhin eine zweiteilige Aufnahme 24, deren beide Einzelteile eine Schelle 33 ausbilden. In der Innenkontur der Aufnahme 24 bzw. innerhalb der Schelle 33 kann der Unterfahrschutz 13 formschlüssig aufgenommen und mittels einer Klemmverbindung in einer gewünschten Position fixiert werden.

Die geschlitzte Platte 21 ist derart ausgelegt, dass sie auf die Ladeschiene 14, beziehungsweise auf deren Eingleiter 15, aufschiebbar ist. Die Geometrie der einzelnen Komponenten ist so gewählt, dass Adapter 17' und der Eingleiter 15 weitgehend spielfrei und formschlüssig aneinander koppelbar sind. Dabei wird der Adapter 17' in Einschieberichtung E, wie in Fig. 9 abgebildet, auf den Eingleiter 15 auf- oder eingeschoben. Der Adapter 17' kann dann werkzeuglos mittels eines Bolzens 23 fixiert werden. Dabei kann beispielsweise vorgesehen sein, dass der Bolzen 23 entsprechende Ausnehmungen im Adapter 17' sowie der Ladeschiene 14 oder deren Eingleiter 15 durchgreift und mit einem Splint gesichert wird.

### Bezugszeichenliste

- 10: Fahrzeugrahmen
- 11: Abschlusstor
- 12: Heck
- 13: Unterfahrschutz
- 14: Ladeschiene
- 15: Eingleiter
- 16: Kombitor
- 17: Adapter
- 18: U-Schenkel
- 19: Rad
- 20: Platte
- 21: Platte
- 22: Abstandshalter
- 23: Bolzen
- 24: Aufnahme
- 25: Querschenkel
- 26: Torbalken
- 27: Verbinder
- 28: Zylinder
- 29: Scharnierpunkt
- 30: Ladeschacht
- 31: erste Aufnahme (an 13)
- 32: zweite Aufnahme (an 10)
- 33: Schelle
- 34: Breite (von 100)
- 35: erste Außenseite (von 100)
- 35': zweite Außenseite (von 100)
- 36: Breite (von 13)
- 37: erste Außenseite (von 13)
- 37': zweite Außenseite (von 13)
- 38: Boden
- 39: Abstand
- 40: Außenseite (von 19)
- 100: Innenlader

- AH: Achse (horizontal)
- AV: Achse (vertikal)
- BR: Blickrichtung
- F: Fahrtrichtung voraus
- P1: Position 1 (Position des Unterfahrschutzes am Abschlusstor)
- P2: Position 2 (Position des Unterfahrschutzes am Fahrzeugrahmen)
- RF: Fahrzeuglängsrichtung
- V: Richtung (Verschwenkung des Unterfahrschutzes)
- E: Einschieberichtung

## Patentansprüche

1. Innenlader (100) mit einem in Fahrzeug-Längsrichtung (R) gerichteten U-förmigen Fahrzeugrahmen (10) mit zwei Schenkeln (18) und mit einem zwischen den Schenkeln (18) angeordneten Ladeschacht (30), welcher durch ein Abschlusstor (11) verschließbar ist, wobei das Abschlusstor (11) einen Unterfahrschutz (13) aufweist, **dadurch gekennzeichnet, dass:**
- der Unterfahrschutz (13) und das Abschlusstor (11) über eine lösbare erste Aufnahme (31) aneinander gekoppelt sind und
- der Fahrzeugrahmen (10) eine zweite Aufnahme (32) zur lösbaren Anbringung des Unterfahrschutzes (13) umfasst,
so dass der Unterfahrschutzes (13) aus einer am Abschlusstor (11) vorgesehenen Position (P1) in eine am Fahrzeugrahmen (10) vorgesehene Position (P2) ummontierbar ist und umgekehrt.

2. Innenlader (100) nach Anspruch 1, **dadurch gekennzeichnet, dass** der Unterfahrschutz (13) aus wenigstens einer Position (P1; P2), vorzugsweise aus beiden Positionen (P1, P2), werkzeuglos demontierbar ist.

3. Innenlader (100) nach einem der Ansprüche 1 bis 2, **dadurch gekennzeichnet, dass** der Unterfahrschutz (13) am Fahrzeugrahmen (10) und/oder an einer an den Schenkeln (18) des Innenladers (100) vorgesehenen Ladeschiene (14) lösbar befestigbar ist.

4. Innenlader (100) nach einem der Ansprüche 1 bis 3, **dadurch gekennzeichnet, dass** der Fahrzeugrahmen (10) wenigstens einen, vorzugsweise mehrere, Eingleiter (15) umfasst, an welchen der Unterfahrschutz (13) lösbar befestigbar ist.

5. Innenlader (100) nach einem der Ansprüche 1 bis 4, **dadurch gekennzeichnet, dass** zur lösbaren Befestigung des Unterfahrschutzes (13) wenigstens ein Adapter (17, 17') vorgesehen ist.

6. Innenlader (100) nach Anspruch 5, **dadurch gekennzeichnet, dass** der Adapter (17) als stegförmiger Verbinder zwischen dem Abschlusstor (11) und dem Unterfahrschutz (13) ausgebildet ist.

7. Innenlader (100) nach Anspruch 5 oder 6, **dadurch gekennzeichnet, dass** der Adapter (17') auf die Ladeschiene (14) und/oder auf deren Eingleiter (15) aufschiebbar ist.

8. Innenlader (100) nach einem der Ansprüche 1 bis 7, **dadurch gekennzeichnet, dass** der Unterfahrschutz (13) als Rundrohr oder Vierkantrohr ausgebildet ist.

9. Innenlader (100) nach einem der Ansprüche 1 bis 8, **dadurch gekennzeichnet, dass** der Unterfahrschutz (13) relativ zum Adapter (17') beweglich, vorzugsweise verschiebbar, ist.

10. Innenlader (100) nach einem der Ansprüche 1 bis 9, **dadurch gekennzeichnet, dass** der Unterfahrschutz (13) relativ zum Fahrzeugrahmen (10) bewegbar an diesen lösbar befestigbar ist.

11. Innenlader (100) nach einem der Ansprüche 1 bis 10, **dadurch gekennzeichnet, dass** der Unterfahrschutz (13) in am Fahrzeugrahmen (10) montierter Position (P2) einen Abstand (39) zu einem Boden (38) aufweist, der maximal 100 mm bis 600 mm beträgt, vorzugsweise 300 mm bis 450 mm.

12. Innenlader (100) nach einem der Ansprüche 1 bis 11, **dadurch gekennzeichnet, dass**
- der Innenlader (100) eine Breite (34) mit einer ersten Außenseite (35) und einer zweiten Außenseite (35') aufweist,
- der Unterfahrschutz (19) eine Breite (36) aufweist mit einer ersten Außenseite (37) und eine zweiten Außenseite (37')
- die Breite (34) des Innenladers (100) größer ist als die Breite (36) des Unterfahrschutzes (13),
- bei in Position (P1) oder Position (P2) montiertem Unterfahrschutz (13) die Außenseiten (35) und (37) sowie (35') und (37') einen Abstand von 50 mm bis 200 mm, vorzugsweise 100 mm, zueinander aufweisen.

## Claims

1. Internal loader (100) with a U-shaped vehicle frame (10) directed in the longitudinal direction (R) of the vehicle with two limbs (18) and with a loading shaft (30) arranged between the limbs (18) and which can be closed by an end gate (11), the end gate (11) having an underride guard (13), **characterised in that**
- the underride guard (13) and the end gate (11) are coupled to one another via a releasable first receptacle (31), and
- the vehicle frame (10) comprises a second receptacle (32) for detachably attaching the underride guard (13),
so that the underride guard (13) can be remounted from a position (P1) provided on the end gate (11) to a position (P2) provided on the vehicle frame (10) and vice versa.

2. Internal loader (100) according to claim 1, **characterised in that** the underride guard (13) can be removed without tools from at least one position (P1; P2), preferably from both positions (P1, P2).

3. Internal loader (100) according to one of claims 1 to 2, **characterised in that** the underride guard (13) can be detachably fastened to the vehicle frame (10) and/or to a loading rail (14) provided on the limbs (18) of the internal loader (100).

4. Internal loader (100) according to one of claims 1 to 3, **characterised in that** the vehicle frame (10) comprises at least one, preferably several, in-slider (15), to which the underride guard (13) can be detachably fastened.

5. Internal loader (100) according to one of claims 1 to 4, **characterised in that** at least one adapter (17, 17') is provided for the detachable fastening of the underride guard (13).

6. Internal loader (100) according to claim 5, **characterised in that** the adapter (17) is designed as a web-shaped connector between the end gate (11) and the underride guard (13).

7. Internal loader (100) according to claim 5 or 6, **characterised in that** the adapter (17') can be slid onto the loading rail (14) and/or onto its in-slider (15).

8. Internal loader (100) according to one of claims 1 to 7, **characterised in that** the underride guard (13) is designed as a round tube or square tube.

9. Internal loader (100) according to one of claims 1 to 8, **characterised in that** the underride guard (13) is movable relative to the adapter (17'), preferably slidable.

10. Internal loader (100) according to one of claims 1 to 9, **characterised in that** the underride guard (13) is movable relative to the vehicle frame (10) and can be detachably attached thereto.

11. Internal loader (100) according to one of claims 1 to 10, **characterised in that** the underride guard (13), in the position (P2) mounted on the vehicle frame (10), has a distance (39) from a floor (38) which is at most 100 mm to 600 mm, preferably 300 mm to 450 mm.

12. Internal loader (100) according to one of claims 1 to 11, **characterised in that**
- the internal loader (100) has a width (34) with a first outer side (35) and a second outer side (35'),
- the underride guard (19) has a width (36) with a first outer side (37) and a second outer side (37')
- the width (34) of the internal loader (100) is larger than the width (36) of the underride guard (13),
- when the underride guard (13) is mounted in position (P1) or position (P2), the outer sides (35) and (37) as well as (35') and (37') are at a distance of 50 mm to 200 mm, preferably 100 mm, from one another.

## Revendications

1. Chargeur intérieur (100) avec un châssis de véhicule (10) en forme de U, orienté dans le sens longitudinal du véhicule (R) avec deux branches (18) et avec une fosse de chargement (30) disposée entre les branches (18), qui peut être fermé par une porte de fermeture (11), la porte de fermeture (11) comportant une protection anti-encastrement (13), **caractérisé en ce que :**
- la protection anti-encastrement (13) et la porte de fermeture (11) sont couplées l'une à l'autre par un premier réception amovible (31) et
- le châssis du véhicule (10) comprend un deuxième réception (32) pour la fixation amovible de la protection anti-encastrement (13),
de sorte que la protection anti-encastrement (13) peut être déplacée d'une position (P1) prévue sur la porte de fermeture (11) à une position (P2) prévue sur le châssis du véhicule (10) et inversement.

2. Chargeur intérieur (100) selon la revendication 1, **caractérisé en ce que** la protection anti-encastrement (13) peut être démontée sans outil à partir d'au moins une position (P1; P2), de préférence à partir des deux positions (P1, P2).

3. Chargeur intérieur (100) selon l'une des revendications 1 à 2, **caractérisé en ce que** la protection anti-encastrement (13) peut être fixée de manière amovible au châssis du véhicule (10) et/ou à un rail de chargement (14) prévu sur les branches (18) du chargeur intérieur (100).

4. Chargeur intérieur (100) selon l'une des revendications 1 à 3, **caractérisé en ce que** le châssis du véhicule (10) comprend au moins un, de préférence plusieurs, glisseur-dedans (15) sur lesquels la protection anti-encastrement (13) peut être fixée de manière amovible.

5. Chargeur intérieur (100) selon l'une des revendications 1 à 4, **caractérisé en ce qu'**au moins un adaptateur (17, 17') est prévu pour la fixation amovible de la protection anti-encastrement (13).

6. Chargeur intérieur (100) selon la revendication 5, **caractérisé en ce que** l'adaptateur (17) est conçu comme un connecteur en forme de barre entre la porte de fermeture (11) et la protection anti-encastrement (13).

7. Chargeur intérieur (100) selon la revendication 5 ou 6, **caractérisé en ce que** l'adaptateur (17') peut être glissé sur le rail de chargement (14) et/ou sur leur glisseur-dedans (15).

8. Chargeur intérieur (100) selon l'une des revendications 1 à 7, **caractérisé en ce que** la protection anti-encastrement (13) est conçue sous la forme d'un tube rond ou d'un tube carré.

9. Chargeur intérieur (100) selon l'une des revendications 1 à 8, **caractérisé en ce que** la protection anti-encastrement (13) est mobile par rapport à l'adaptateur (17'), de préférence coulissante.

10. Chargeur intérieur (100) selon l'une des revendications 1 à 9, **caractérisé en ce que** la protection anti-encastrement (13) peut être fixée de manière amovible et mobile par rapport au châssis du véhicule (10).

11. Chargeur intérieur (100) selon l'une des revendications 1 à 10, **caractérisé en ce que** la protection anti-encastrement (13) présente, dans la position (P2) montée sur le châssis du véhicule (10), une distance (39) par rapport à un plancher (38) qui est au maximum de 100 mm à 600 mm, de préférence de 300 mm à 450 mm.

12. Chargeur intérieur (100) selon l'une des revendications 1 à 11, **caractérisé en ce que**
- le chargeur intérieur (100) présente une largeur (34) avec un premier côté extérieur (35) et un deuxième côté extérieur (35'),
- la protection anti-encastrement (19) présente une largeur (36) avec une première face extérieure (37) et une deuxième face extérieure (37')
- la largeur (34) du chargeur intérieur (100) est supérieure à la largeur (36) de la protection anti-encastrement (13),
- lorsque la protection anti-encastrement (13) est montée en position (P1) ou (P2), les côtés extérieurs (35) et (37) ainsi que (35') et (37') présentent un écart les uns aux autres de 50 mm à 200 mm, de préférence de 100 mm.
